# EUROPEAN PATENT SPECIFICATION

(11) **EP 2 460 869 B1**
(45) Date of publication and mention of the grant of the patent: **06.09.2017**
(21) Application number: 10804590.7
(22) Date of filing: 28.07.2010
(51) Int. Cl.: C10B 53/08, C10B 57/06, C10B 49/06

(54) **PROCESS FOR PRODUCING FERRO COKE**
VERFAHREN ZUR HERSTELLUNG VON EISENKOKS
PROCEDE DE PRODUCTION DE FERROCOKE

(30) Priority: 29.07.2009 JP 2009175983; 15.07.2010 JP 2010160272
(43) Date of publication of application: 06.06.2012
(73) Proprietor: JFE Steel Corporation, Tokyo 100-0011 (JP)
(72) Inventor: AMAGASA, Toshiaki, Tokyo 100-0011 (JP); ANYASHIKI, Takashi, Tokyo 100-0011 (JP)
(74) Representative: Grünecker Patent- und Rechtsanwälte PartG mbB
(86) International application number: PCT/JP2010/063141
(87) International publication number: WO 2011/013848

(56) References cited:
- JP-A- H0 665 579
- JP-A- H0 726 267
- JP-A- H07 157 766
- JP-B2- 4 218 443
- JP-B2- 55 010 638

## Description

### Field of the Invention

The present invention relates to a method for producing carbon iron composite (ferrocoke) in which a vertical carbonization furnace is used to continuously produce carbon iron composite.

### Description of the Related Arts

In accordance with one known technique, non or slightly caking coal, which is the main raw material, is mixed with a binder (bond) and is pressed to form briquettes, which are then fed into a vertical carbonization furnace to continuously produce formed coke serving as metallurgical coke. In accordance with a known method for producing formed coke, a top gas of a carbonization furnace is introduced as a coolant gas into a lower portion of a cooling chamber directly coupled to a carbonization chamber of the carbonization furnace, and most of the gas passing through the cooling chamber is exhausted from an upper portion of the cooling chamber and is supplied as a heating medium gas to an inlet in an intermediate portion of the carbonization furnace (see, for example, Patent Document 1). The carbonization furnace used in this method has three gas inlets (an intermediate portion of the carbonization chamber, a lower portion of the carbonization chamber, and a lower portion of the cooling chamber) and one gas outlet (an upper portion of the cooling chamber).

In order to heat a gas to be blown into the carbonization chamber in the carbonization furnace, a gas heating method and a gas heater are known in which a first heated circulating gas and a combustion gas produced by the combustion of C gas are mixed, are post-heated to a predetermined temperature, and are blown into the carbonization chamber (see, for example, Patent Document 2).

In accordance with one known technique, use of a large amount of hard coal is enabled by compounding a coking coal having specified properties with a specified amount of an iron ore powder in the process for producing a metallurgical coke using a shaft furnace (see Patent Document 3).

### Prior Art Document

### Patent Documents

Patent document 1: Japanese Examined Patent Application Publication No. 56-47234
Patent Document 2: Japanese Unexamined Patent Application Publication No. 7-26267
Patent Document 3: Japanese Unexamined Patent Application Publication No. 6-65579

### Summary of the Invention

### Technical Problem

However, when a formed product of a carbon-containing substance and an iron-containing substance is carbonized in a vertical carbonization furnace to produce carbon iron composite containing metallic iron, use of the method described above in which a first heated circulating gas and a combustion gas produced by the combustion of C gas are mixed, are post-heated to a predetermined temperature, and are blown into the carbonization chamber may result in variations in gas composition after mixing with the combustion gas, failing to reduce iron ore in the carbon iron composite, causing oxidation of reduced metallic iron, or causing an oxidation reaction of a coke component. This may result in a low strength of carbon iron composite. A decrease in the strength of carbon iron composite can cause a problem that carbon iron composite is pulverized to a powder in a blast furnace, thus lowering air permeability.

Accordingly, it is an object of the present invention to solve the problems of related art and provide a method for producing carbon iron composite with a vertical carbonization furnace in which the oxidation reaction of a component in the carbon iron composite can be retarded to prevent a decrease in the strength of the carbon iron composite.

### Means to solve the Problem

In order to achieve the object described above, the present invention provides a method for producing carbon iron composite described below.

A method for producing carbon iron composite (ferrocoke) in which a formed product of a carbon-containing substance and an iron-containing substance is fed into a vertical carbonization furnace and a carbonization gas is blown into the vertical carbonization furnace, the method comprising:
circulating a gas exhausted from a top portion of the carbonization furnace as a circulating gas for carbonization;
burning a fuel gas to produce a combustion gas;
mixing the combustion gas and the circulating gas to produce a gas mixture;
blowing the gas mixture as a high-temperature carbonization gas into the vertical carbonization furnace; and
controlling a mixing amount of the circulating gas and the combustion gas such that the composition of the gas mixture has a reducing atmosphere and has a composition in which CO/CO is 0.5 or more and H₂/H₂O is 2.5 or more, the ratios are based on percent by volume.

The following are preferred conditions in the method for producing carbon iron composite.
(a) The combustion gas is produced by preheating air to produce preheated air and burning the fuel gas with the preheated air.
(b) The combustion gas is produced by burning the fuel gas with oxygen-enriched air.

In the method for producing carbon iron composite, the gas mixture has a composition in which CO/CO₂ is 0.5 or more and H₂/H₂O is 2.5 or more. The gas mixture preferably has a composition in which CO/CO₂ ranges from 0.5 to 1.2 and H₂/H₂O ranges from 2.5 to 5. The gas mixture preferably has a temperature in the range of 800°C to 1000°C.

The method for producing carbon iron composite preferably further includes preheating the circulating gas and blowing the preheated circulating gas into the vertical carbonization furnace as a low-temperature carbonization gas. The preheated circulating gas preferably has a temperature in the range of 600°C to 750°C.

Carbon iron composite produced in accordance with the present invention is produced using a raw material containing 70% by mass or more coal and iron ore. In carbon iron composite, iron ore has been partially reduced, and the catalytic effect of iron ore can increase the reactivity of coke and the gas utilization in a blast furnace. Thus, the percentage of iron ore is preferably at least 5% by mass or more, more preferably 10% by mass or more. However, more than 40% by mass iron ore results in a marked decrease in the strength of carbon iron composite. Thus, the percentage of iron ore preferably ranges from 5% to 40% by mass, more preferably 10% to 40% by mass, of the total amount of iron ore and coal. The raw material thus prepared is formed into a massive product with a forming machine. The massive product is carbonized by a direct heating method with hot air in a vertical carbonization furnace, such as a shaft-type heat treatment furnace, to produce carbon iron composite.

### Advantageous Effects of Invention

In accordance with the present invention, the component of a gas to be blown into a carbonization furnace can be controlled such that carbon iron composite is produced in an atmosphere in which an carbon iron composite component can be reduced. This allows the reduction of iron ore of an carbon iron composite component, prevents oxidation of the reduced metallic iron, prevents a decrease in the strength of carbon iron composite caused by the oxidation of the coke component, allows the production of high-quality carbon iron composite, and promotes the utilization of carbon iron composite in a blast furnace.

### Brief Description of the Drawings

Fig. 1 is a schematic view of an embodiment of the present invention.
Fig. 2 is a schematic view of a high-temperature-carbonization-gas inlet according to an embodiment of the present invention.
Fig. 3 is a schematic view of a high-temperature-carbonization-gas inlet according to an embodiment of the present invention.
Fig. 4 is a graph showing the relationship between the high-temperature carbonization gas components and the strength of carbon iron composite.

### Embodiments for carrying out the invention

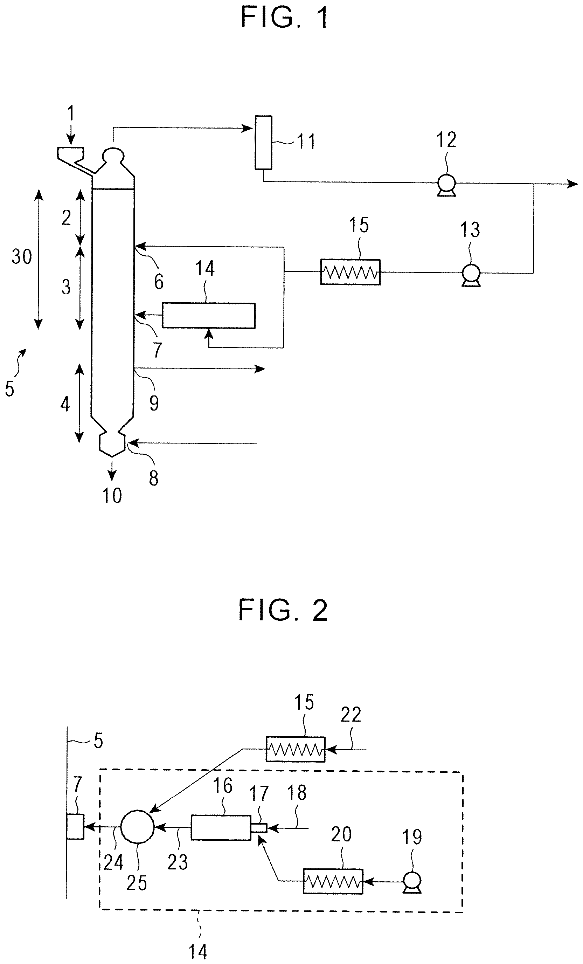

A carbonization furnace 5 illustrated in Fig. 1 is an example of vertical carbonization furnaces for use in the production of carbon iron composite. The vertical carbonization furnace 5 includes a carbonization chamber 30, which includes a low-temperature carbonization chamber 2 and a high-temperature carbonization chamber 3, and a cooling chamber 4. In the production of carbon iron composite with this vertical carbonization furnace, a formed product 1 of carbon iron composite raw materials, more specifically, a carbon-containing substance, such as coal, and an iron-containing substance, such as iron ore, is fed into the vertical carbonization furnace 5 from the top. The formed product 1 is carbonized with a heating medium gas introduced through tuyeres 6 and 7 during falling through the furnace, is cooled with a coolant gas, and is discharged as carbon iron composite 10 from the bottom of the carbonization furnace. The coolant gas is introduced through a coolant gas inlet 8 and is exhausted through a coolant gas outlet 9. A gas from the top of the furnace is directly cooled in a cooler 11 and is pressurized in a circulation blower 12. Part of the gas is directed to the outside of the system as a recovery gas, and the remaining part of the gas is circulated in the system as a circulating gas.

In the present embodiment, a high-temperature carbonization gas to be blown into the high-temperature carbonization chamber 3 of the vertical carbonization furnace is a gas mixture prepared by mixing a circulating gas and a combustion gas, which is produced by burning a fuel gas, in a high-temperature-carbonization-gas heater 14 and heating the mixture to a predetermined temperature. In the formation of the gas mixture, the mixing ratio of the circulating gas to the combustion gas is controlled with a mixing ratio controller (not shown) such that the composition of the gas mixture has a reducing atmosphere. In order that the composition of the gas mixture can have a reducing atmosphere, preferably, air with which the fuel gas is burnt is preheated or is enriched with oxygen.

Preheating of air with which the fuel gas is burnt has the following advantages.
(a) The temperature of a combustion gas produced by burning the fuel gas with air can be increased.
(b) The volume of a combustion gas fed into the carbonization furnace can be decreased. This can decrease the concentration of CO₂ fed into the carbonization furnace.

The oxygen-enrichment of air with which the fuel gas is burnt can also increase the temperature of the combustion gas produced by the combustion of the fuel gas with the oxygen-enriched air and consequently decrease the concentration of CO₂ fed into the carbonization furnace.

Thus, the composition of the gas mixture of the circulating gas and the combustion gas has a reducing atmosphere, which allows the production of carbon iron composite without a decrease in the strength of carbon iron composite caused by the oxidation of its component.

The gas mixture of the circulating gas and the combustion gas has CO/CO₂ of 0.5 or more and H₂/H₂O of 2.5 or more. Such a composition of the gas mixture can ensure the prevention of a decrease in the strength of carbon iron composite caused by the oxidation of an carbon iron composite component. Preferably, the gas mixture has CO/CO₂ of 0.8 or more and H₂/H₂O of 3.0 or more. The CO/CO₂ and H₂/H₂O ratios of the gas mixture have no particular upper limit provided that they produce a reducing atmosphere. However, in actual operation, the CO/CO₂ ratio of the gas mixture may be 1.2 or less, and the H₂/H₂O ratio may be 5.0 or less. These ratios are based on percent by volume.

The composition of the gas mixture can be controlled in the following manner.
(a) The mixing ratio of the circulating gas to the combustion gas is controlled. An increase in the percentage of the circulating gas results in an increase in CO/CO₂ and H₂/H₂O.
(b) Preheating of air with which the fuel gas is burnt can decrease the volume of the combustion gas and consequently the CO₂ concentration of the gas mixture.
(c) Oxygen-enrichment of air with which the fuel gas is burnt can increase the temperature of the combustion gas and consequently decrease the CO₂ concentration of the gas mixture.
(d) The temperature of the gas mixture is controlled. A gas mixture temperature as low as approximately 800°C can result in a decrease in the amount of air with which the fuel gas is burnt, thus producing a more reducing atmosphere.
(e) The fuel gas is changed. For example, use of a gas having a higher calorific value than LNG as the fuel gas can produce a more reducing atmosphere.

The present embodiment will be described in detail below with reference to Fig. 1. A vertical carbonization furnace 5 in Fig. 1 includes a carbonization chamber 30, which includes a low-temperature carbonization chamber 2 and a high-temperature carbonization chamber 3, and a cooling chamber 4. A formed product 1 of carbon iron composite raw materials, more specifically, a carbon-containing substance and an iron-containing substance is fed into the vertical carbonization furnace 5 from the top. The formed product 1 is carbonized with a heating medium gas introduced through a low-temperature-gas-blowing tuyere 6 and a high-temperature-gas-blowing tuyere 7 during falling through the furnace, is cooled with a coolant gas introduced through a coolant gas inlet 8 and exhausted through a coolant gas outlet 9, and is discharged as carbon iron composite 10 from the bottom of the carbonization furnace 5. A gas from the top of the furnace is cooled in a gas cooler 11 and is pressurized in a circulation blower 12. Part of the gas is directed to the outside of the system as a recovery gas, and the remaining part of the gas is circulated in the system as a circulating gas. Preferably, approximately 80% to 99%, more preferably 85% to 97%, of the top gas is used as a circulating gas. Part of the circulating gas is pressurized with a blower 13 and is first heated (preheated) with a heat exchanger 15. The first heated (preheated) circulating gas is mixed with a combustion gas produced by the combustion of a fuel gas (in a combustion chamber 16 described below) in a high-temperature-carbonization-gas heater 14 and is returned to the carbonization furnace 5 through the high-temperature-gas-blowing tuyere 7 as a high-temperature carbonization gas, which is the gas mixture post-heated to a predetermined temperature. The high-temperature-carbonization-gas heater 14 will be described in detail below.

A coolant gas is introduced into the cooling chamber 4 through the coolant gas inlet 8, and a cold exhaust gas is evacuated through the coolant gas outlet 9. The coolant gas is preferably the circulating gas passing through the circulation blower 12 and the pressurizing blower 13. The temperature of the coolant gas preferably ranges from the temperature of the circulating gas in the circulation blower 12 to the temperature of the circulating gas + 30°C.

Part of the circulating gas preheated with the heat exchanger 15 is introduced into the carbonization furnace 5 through the low-temperature-gas-blowing tuyere 6 as a low-temperature carbonization gas. The temperature of the circulating gas preheated with the heat exchanger 15 preferably ranges from 600°C to 750°C, more preferably 620°C to 730°C. A circulating gas temperature of 600°C or more results in a temperature of a top portion of the carbonization furnace of 300°C or more, causing no trouble resulting from the deposition of tar during operation. A circulating gas temperature of 750°C or less results in a moderate temperature of a top portion of the carbonization furnace, causing no trouble resulting from poor hermeticity during operation.

Fig. 2 illustrates the high-temperature-carbonization-gas heater 14 according to the present embodiment for blowing a high-temperature carbonization gas into the high-temperature-gas-blowing tuyere 7 of the vertical carbonization furnace 5 illustrated in Fig. 1. A circulating gas 22 first heated (preheated) with the heat exchanger 15 and a high-temperature combustion gas 23 are mixed and post-heated in a mixing chamber 25 and are introduced into the carbonization furnace 5 through the high-temperature-gas-blowing tuyere 7 as a gas mixture 24.

The temperature of the gas mixture 24 preferably ranges from 800°C to 1000°C, more preferably 820°C to 980°C. A temperature of the gas mixture 24 in the range of 800°C to 1000°C results in a sufficiently high reduction rate of iron ore. A temperature of the gas mixture 24 of 1000°C or less does not cause the degradation of carbon in the vicinity of reduced metallic iron induced by gasification, preventing a decrease in the strength of carbon iron composite.

Since the combustion gas 23 has a high temperature of 1000°C or more, the flame temperature is still higher than the temperature of the combustion gas 23. Direct contact of a circulating gas containing a hydrocarbon gas with a flame therefore produces carbon by the decomposition of the hydrocarbon gas. The resulting carbon is deposited on a gas pipe as soot, possibly causing a blockage or other troubles. Thus, the circulating gas 22 and the combustion gas 23 are mixed in the mixing chamber 25 in the absence of combustion gas flame immediately before introduced into the carbonization furnace 5. This causes little carbon deposition on the gas pipe.

The combustion gas 23 is produced by burning a fuel gas 18 with a combustor (burner) 17 in a combustion chamber 16. Combustion air is supplied by a combustion air blower 19 and is preheated in a combustion air heater (air preheater) 20. Part of the top gas may be used as the fuel gas 18.

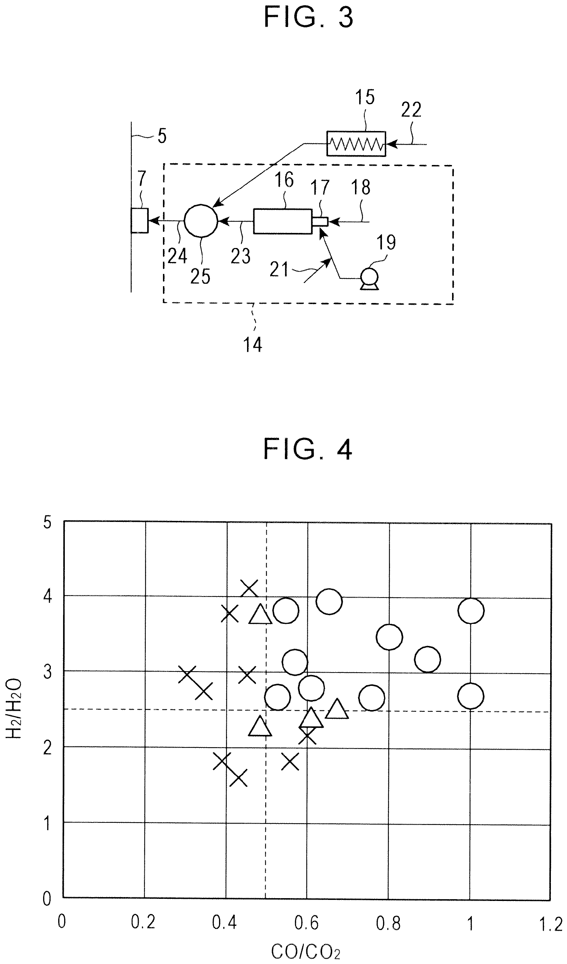

Fig. 3 illustrates an embodiment in which the combustion air is enriched with oxygen. The combustion air from the combustion air blower 19 is enriched with oxygen 21. A higher temperature of the combustion gas 23 results in a lower volume ratio of the combustion gas 23 to the circulating gas 22. The oxygen-enrichment of the combustion air preferably ranges from 24% to 50% by volume, more preferably 27% to 45% by volume. An oxygen-enrichment of less than 24% by volume results in a low temperature of the combustion gas 23, which necessitates more combustion to increase the temperature. This may result in an increase in the concentration of CO₂ fed into the carbonization furnace. An oxygen-enrichment of more than 50% by volume may result in a high flame temperature and an increase in the volume of the circulating gas 22 to reduce the temperature of the gas mixture 24 to a target temperature, resulting in inefficient mixing. The term "oxygen-enrichment", as used herein, refers to the concentration of oxygen in the entire gas mixture when oxygen is added to the combustion air.

Table 1 shows the comparison of the concentrations of the components in the gas mixture 24 when the temperature of the gas mixture supplied to the carbonization furnace 5 using the apparatus illustrated in Fig. 2 or 3 (the temperature of the high-temperature carbonization gas blown into the furnace through the high-temperature-gas-blowing tuyere 7) is 950°C.

**[Table 1]**

| (Unit: percent by volume) | | | | | | | | |
|---|---|---|---|---|---|---|---|---|
| | H₂ | CO | CO₂ | CH₄ | H₂O | N₂ | CO/CO₂ | H₂/H₂O |
| Circulating gas | 30.0 | 10.0 | 16.0 | 5.0 | 6.0 | 33.0 | 0.63 | 5.00 |
| Combustion gas | 0.0 | 0.0 | 13.9 | 0.0 | 20.6 | 65.4 | 0.00 | 0.00 |
| Gas mixture | 22.5 | 7.5 | 15.5 | 3.8 | 9.7 | 41.1 | 0.48 | 2.33 |
| With preheated air (800°C) | 24.6 | 8.2 | 15.6 | 4.1 | 8.7 | 38.9 | 0.52 | 2.84 |
| With oxygen-enrichment (40%) | 24.6 | 8.2 | 16.4 | 4.1 | 9.8 | 36.8 | 0.50 | 2.52 |

In Table 1, "Gas mixture", "With preheated air", and "With oxygen-enrichment" have the following meanings:
"Gas mixture": the composition of the gas mixture 24 without preheating or oxygen-enrichment of air.
"With preheated air": the composition of the gas mixture 24 in the case that the combustion air is preheated to 800°C with the apparatus illustrated in Fig. 2.
"With oxygen-enrichment": the composition of the gas mixture 24 in the case that the combustion air is enriched with 40% by volume oxygen with the apparatus illustrated in Fig. 3.

It is shown that preheating or oxygen-enrichment of the combustion air alters the ratio of the reducing gas components (CO and H₂) to the oxidizing gas components (CO₂ and H₂O) in the gas mixture 24.

Although preheating and oxygen-enrichment of air are independently performed in the embodiments illustrated in Figs. 2 and 3, it is also effective to simultaneously perform preheating and oxygen-enrichment of air.

In accordance with the present invention, a reduction in the strength of carbon iron composite caused by the oxidation of an carbon iron composite component can be prevented. Furthermore, since high-temperature gases are mixed in the close vicinity of the carbonization furnace, the gas pipe is not blocked with carbon. This obviates the necessity for a process of removing soot. This allows the high-temperature carbonization gas to be continuously introduced into the carbonization furnace, thus stabilizing the operation. Thus, the apparatus can be simplified as compared with conventional apparatuses. The cost of equipment and the operating costs are also decreased.

### EXAMPLE 1

Carbon iron composite was produced with the vertical carbonization furnace illustrated in Fig. 1. Preheating and oxygen-enrichment of a combustion air were performed with the apparatuses illustrated in Figs. 2 and 3 under different conditions. The strength of carbon iron composite thus produced was measured. Fig. 4 shows the test results.

In Fig. 4, symbols ○, Δ, and X have the following meanings:
Symbol ○: Carbon iron composite having a strength of more than 90% of the strength of conventional coke.
Symbol Δ: Carbon iron composite having a strength in the range of 80% to 90% of the strength of conventional coke.
Symbol X: Carbon iron composite having a strength of less than 80% of the strength of conventional coke.

High-strength carbon iron composite was produced when the composition of the gas mixture (the high-temperature carbonization gas blown into the furnace through the high-temperature-gas-blowing tuyere 7) 24 had CO/CO₂ of 0.5 or more and H₂/H₂O of 2.5 or more. This indicates that the atmosphere of the gas mixture can be controlled so as to have CO/CO₂ of 0.5 or more and H_{2/}H₂O of 2.5 or more to prevent a decrease in the strength of carbon iron composite caused by the oxidation of a carbon iron composite component. In particular, an atmosphere of the gas mixture having CO/CO₂ of 0.8 or more and H_{2/}H₂O of 3.0 or more resulted in the production of carbon iron composite having substantially the same strength as conventional coke.

### Explanation of Reference Numerals

- 1: Formed product
- 2: Low-temperature carbonization chamber
- 3: High-temperature carbonization chamber
- 4: Cooling chamber
- 5: Vertical carbonization furnace
- 6: Low-temperature-gas-blowing tuyere
- 7: High-temperature-gas-blowing tuyere
- 8: Coolant gas inlet
- 9: Coolant gas outlet
- 10: Carbon iron composite
- 11: Gas cooler
- 12: Circulation blower
- 13: Pressurizing blower
- 14: High-temperature-carbonization-gas heater
- 15: Heat exchanger
- 16: Combustion chamber
- 17: Combustor
- 18: Fuel gas
- 19: Combustion air blower
- 20: Combustion air heater
- 21: Oxygen
- 22: Circulating gas
- 23: Combustion gas
- 24: Gas mixture
- 25: Mixing chamber
- 30: Carbonization chamber

## Claims

1. A method for producing carbon iron composite in which a formed product of a carbon-containing substance and an iron-containing substance is fed into a vertical carbonization furnace and a carbonization gas is blown into the vertical carbonization furnace, the method comprising:
circulating a gas exhausted from a top portion of the carbonization furnace as a circulating gas for carbonization;
**characterized in that,**
burning a fuel gas to produce a combustion gas;
mixing the combustion gas and the circulating gas to produce a gas mixture;
blowing the gas mixture as a high-temperature carbonization gas into the vertical carbonization furnace; and
controlling a mixing amount of the circulating gas and the combustion gas such that the composition of the gas mixture has a reducing atmosphere and has a composition in which CO/CO₂ is 0.5 or more and H₂/H₂O is 2.5 or more, the ratios are based on percent by volume.

2. The method for producing carbon iron composite according to claim 1, wherein the combustion gas is produced by preheating air to produce preheated air and burning the fuel gas with the preheated air.

3. The method for producing carbon iron composite according to claim 1, wherein the combustion gas is produced by burning the fuel gas with oxygen-enriched air.

4. The method for producing carbon iron composite according to claim 1, wherein the gas mixture has a composition in which CO/CO₂ ranges from 0.5 to 1.2 and H₂/H₂O ranges from 2.5 to 5.

5. The method for producing carbon iron composite according to claim 1, wherein the gas mixture has a temperature of 800°C to 1000°C.

6. The method for producing carbon iron composite according to claim 1, further comprising:
preheating the circulating gas; and
blowing the preheated circulating gas into the vertical carbonization furnace as a low-temperature carbonization gas.

7. The method for producing carbon iron composite according to claim 6, wherein the preheated circulating gas has a temperature of 600°C to 750°C.

## Patentansprüche

1. Verfahren zum Erzeugen eines gekohlten Eisenverbunds, in dem ein geformtes Produkt aus einer kohlenstoffhaltigen Substanz und einer eisenhaltigen Substanz in einen vertikalen Karbonisierungsofen geführt wird und ein Karbonisierungsgas in den vertikalen Karbonisierungsofen geblasen wird, wobei das Verfahren umfasst:
Zirkulieren eines von einem oberen Teil des Karbonisierungsofens ausgestoßenen Gases als eines Zirkulationsgases für eine Karbonisierung,
**gekennzeichnet durch:**
Verbrennen eines Brenngases, um ein Verbrennungsgas zu erzeugen,
Mischen des Verbrennungsgases mit dem Zirkulationsgas, um eine Gasmischung zu erzeugen,
Blasen der Gasmischung als eines Hochtemperatur-Karbonisierungsgases in den vertikalen Karbonisierungsofen, und
Steuern der Mischmengen des Zirkulationsgases und des Verbrennungsgases derart, dass die Gasmischung eine reduzierende Atmosphäre und eine Zusammensetzung, in der CO/CO₂ gleich 0,5 oder größer ist und H₂/H₂O gleich 2,5 oder größer ist, aufweist, wobei die genannten Verhältnisse auf Volumenprozenten beruhen.

2. Verfahren zum Erzeugen eines gekohlten Eisenverbunds nach Anspruch 1, wobei das Verbrennungsgas erzeugt wird, indem Luft vorgeheizt wird, um vorgeheizte Luft zu erzeugen, und das Brenngas mit der vorgeheizten Luft verbrannt wird.

3. Verfahren zum Erzeugen eines gekohlten Eisenverbunds nach Anspruch 1, wobei das Verbrennungsgas erzeugt wird, indem das Brenngas mit sauerstoffangereicherter Luft verbrannt wird.

4. Verfahren zum Erzeugen eines gekohlten Eisenverbunds nach Anspruch 1, wobei die Gasmischung eine Zusammensetzung aufweist, in der CO/CO₂ von 0,5 bis 1,1 reicht und H₂/H₂O von 2,5 bis 5 reicht.

5. Verfahren zum Erzeugen eines gekohlten Eisenverbunds nach Anspruch 1, wobei die Gasmischung eine Temperatur von 800°C bis 1000°C aufweist.

6. Verfahren zum Erzeugen eines gekohlten Eisenverbunds nach Anspruch 1, das weiterhin umfasst:
Vorheizen des Zirkulationsgases, und
Blasen des vorgeheizten Zirkulationsgases in den vertikalen Karbonisierungsofen als eines Niedertemperatur-Karbonisierungsgases.

7. Verfahren zum Erzeugen eines gekohlten Eisenverbunds nach Anspruch 6, wobei das vorgeheizte Zirkulationsgas eine Temperatur von 600°C bis 750°C aufweist.

## Revendications

1. Procédé de production de composite carbone fer dans lequel un produit façonné à partir d'une substance contenant du carbone et d'une substance contenant du fer est introduit dans un four de carbonisation vertical et un gaz de carbonisation est soufflé dans le four de carbonisation vertical, le procédé comprenant :
la circulation d'un gaz issu d'une partie supérieure du four de carbonisation en tant que gaz de circulation pour la carbonisation ;
**caractérisé par,**
la combustion d'un gaz combustible pour produire un gaz de combustion ;
le mélange du gaz de combustion et du gaz de circulation pour produire un mélange gazeux ;
le soufflage du mélange gazeux en tant que gaz de carbonisation à haute température dans le four de carbonisation vertical ; et
la régulation d'une quantité de mélange du gaz de circulation et du gaz de combustion de sorte que la composition du mélange gazeux présente une atmosphère réductrice et a une composition dans laquelle CO/CO₂ est supérieur ou égal à 0,5 et H₂/H₂O est supérieur ou égal à 2,5, les rapports étant basés sur le pourcentage en volume.

2. Procédé de production de composite carbone fer selon la revendication 1, dans lequel le gaz de combustion est produit en préchauffant de l'air afin de produire de l'air préchauffé et en brûlant le gaz combustible avec l'air préchauffé.

3. Procédé de production de composite carbone fer selon la revendication 1, dans lequel le gaz de combustion est produit en brûlant le gaz combustible avec de l'air enrichi en oxygène.

4. Procédé de production de composite carbone fer selon la revendication 1, dans lequel le mélange gazeux a une composition dans laquelle CO/CO₂ varie de 0,5 à 1,2 et H₂/H₂O varie de 2,5 à 5.

5. Procédé de production de composite carbone fer selon la revendication 1, dans lequel le mélange gazeux a une température de 800 °C à 1000 °C.

6. Procédé de production de composite carbone fer selon la revendication 1, comprenant en outre :
le préchauffage du gaz de circulation ; et
le soufflage du gaz de circulation préchauffé dans le four de carbonisation vertical en tant que gaz de carbonisation à basse température.

7. Procédé de production de composite carbone fer selon la revendication 6, dans lequel le gaz de circulation préchauffé a une température de 600 °C à 750 °C.
